# EUROPEAN PATENT APPLICATION

(11) **EP 4 478 582 A1**
(43) Date of publication of application: **18.12.2024**
(21) Application number: 24179309.0
(22) Date of filing: 31.05.2024
(51) Int. Cl.: H02J 7/00, H01M 10/44

(54) **BATTERY CHARGER AND METHOD OF CHARGING RECHARGEABLE BATTERIES**

(30) Priority: 15.06.2023 IT 202300012312
(71) Applicant: Stiga S.p.A., 31033 Castelfranco Veneto (TV) (IT)
(72) Inventor: VILLANOVA, Marco, 31020 Sernaglia della Battaglia (TV) (IT)
(74) Representative: PGA S.p.A.

(57) **Abstract**

The invention relates to a battery charger (100) for tools with rechargeable batteries, comprising at least a first station (101) configured to be operatively connected to, and supply electrical energy for charging, at least a first rechargeable battery (4a) and a second station (102) configured to be operatively connected to, and supply electrical energy for charging, at least a second rechargeable battery (4b) and a data processing unit (103), operatively connected to said first station (101) and to said second station (102). The battery charger (100) has at least a first charging configuration, taking place when said at least a first rechargeable battery (4a) and said at least a second rechargeable battery (4b) are connected to the first station (101) and to the second station (102), respectively. In the first charging configuration the data processing unit (103) executes a switching (200) of an activation and/or power supply of said first station (101) and said second station (102) so that said at least a first rechargeable battery (4a) and said at least a second rechargeable battery (4b) are, in use, alternately charged.

## Description

### Technical field

The present disclosure relates to the field of rechargeable batteries and related charging devices.

The present disclosure in particular relates to a battery charger and a method of charging rechargeable batteries.

### Prior art

Tools are known which exploit electrical energy coming from one or more rechargeable batteries for the power supply of a power user. In particular, garden tools are known which are configured to accommodate, or in any case to be operatively connected with, rechargeable batteries.

Charging stations are also known which are configured to be electrically connected with the rechargeable batteries of the aforesaid tools so as to allow the at least partial charging thereof.

The charging stations comprise a battery charger whose electrical power is related to the power, in particular to the capacity of the rechargeable batteries. In particular, in the design phase, the sizing of the electrical components of the battery chargers is associated with the electrical power (in particular electrical current) which the battery charger must be capable of delivering.

It is further known that in the process of charging a rechargeable battery, certain chemical/physical phenomena determine a non-linearity in the achievement of certain voltage values and/or stored electrical energy as a function of the charging time.

It is further known that certain tools require minimum voltage or current or electrical energy levels to operate; therefore, partially charged batteries, but whose charge level does not guarantee adapting to the voltage or current or electrical energy levels which are required by the power user of the tool, are not in fact usable for the aforesaid tool or can only be used with the risk of malfunctions or safety.

### Summary

The present disclosure relates to a battery charger, a charging method and a computer program which allow to solve the disadvantages described above.

For these purposes, the aforesaid battery charger, method and computer program are described herein in accordance with aspects which can be combined with each other or with portions of the detailed description and/or claims.

In accordance with the present disclosure, a battery charger (100) for tools is disclosed herein, in particular of the type with power supply by means of rechargeable batteries, comprising:
- at least a first station (101), in particular a first charging port, configured to be operatively connected with at least a first rechargeable battery (4a) and a second station (102), in particular a second charging port, configured to be operatively connected with at least a second rechargeable battery (4b), said first station (101) being configured to provide electrical energy to said first rechargeable battery (4a) and said second station (102) being configured to provide electrical energy to said second rechargeable battery (4b), and
- a data processing unit (103), operatively connected to said first station (101) and to said second station (102), so as to arrange an activation of said first station (101) so as to determine a charging of said first rechargeable battery (4a) by means of said first station (101) and/or an activation of said second station (102) so as to determine a charging of second rechargeable battery (4b) by means of said second station (102),

in which the battery charger (100) is configured to actuate at least one charging configuration, at a use condition in which said first rechargeable battery (4a) and said second rechargeable battery (4b) are connected to the first station (101) and the second station (102), respectively,
characterized in that, in said charging configuration, the data processing unit (103) executes or imposes at least a first switching (200) from a state of an activation of said first station (101) to a state of activation of said second station (102) and a second switching (200) from a state of an activation of said second station (102) to a state of activation of said first station (101), so that said first rechargeable battery (4a) and said second rechargeable battery (4b) are, in said use condition, alternately charged with each other.

According to a further non-limiting aspect, in accordance with the preceding aspect, said battery charger (100) is further configured to operate said first switching (200) and said second switching (200) automatically.

According to a further non-limiting aspect, in accordance with any one of the preceding aspects, said first switching (200) comprises an activation and/or a power supply of said first station (101) as an alternative to said second station (102).

According to a further non-limiting aspect, in accordance with any one of the preceding aspects, said second switching (200) comprises an activation and/or a power supply of said second station (102) as an alternative to said first station (101).

According to a further non-limiting aspect, in accordance with any one of the preceding aspects, said data processing unit (103) is configured to load from a memory (106) and/or to receive from an external data source (105), at least one electronic datum indicating a first predetermined charging value (R₁) or charging time (T₁).

According to a further non-limiting aspect, in accordance with the preceding aspect, in said charging configuration said data processing unit (103) is configured to execute said first switching (200) and/or said second switching (200) upon reaching, by said first rechargeable battery (4a) and/or said second rechargeable battery (4b), at least said first predetermined charging value (R₁) or charging time (T₁).

According to a further non-limiting aspect, in accordance with any one of the two preceding aspects, in said charging configuration, said data processing unit (103) is configured to keep said first rechargeable battery (4a) or, alternatively, said second rechargeable battery (4b), constantly charging until the charging has reached the first predetermined charging value (R₁) or until the charging time has reached the first predetermined charging time value (T₁).

According to a further non-limiting aspect, in accordance with any one of the preceding aspects, in said charging configuration, said data processing unit (103) is configured to reiterate said first switching (200) and said second switching (200) until reaching a threshold charging value (300) in said first rechargeable battery (4a) and/or in said second rechargeable battery (4b).

According to a further non-limiting aspect, according to the preceding aspect, said threshold charging value (300) is at least 70% of the total charge of said first rechargeable battery (4a) and/or of said second rechargeable battery (4b), or 80% of the total charge of said first rechargeable battery (4a) and/or of said second rechargeable battery (4b), or 85% of the total charge of said first rechargeable battery (4a) and/or of said second rechargeable battery (4b), or 90% of the total charge of said first rechargeable battery (4a) and/or of said second rechargeable battery (4b) or 100% of the total charge of said first rechargeable battery (4a) and/or of said second rechargeable battery (4b).

According to a further non-limiting aspect, in accordance with any one of the preceding aspects, said battery charger (100) is configured to charge said at least a first rechargeable battery (4a) and/or said at least a second rechargeable battery (4b) with a direct current, or with an alternating current, preferably reducing as the total charge increases, preferably in which in said charging configuration said battery charger (100) is configured to charge said at least a first rechargeable battery (4a) and/or said at least a second rechargeable battery (4b) with said direct current.

According to a further non-limiting aspect, in accordance with any one of the six preceding aspects, said first predetermined charging value (R₁) is defined in accordance with a power or current absorption of said tool and/or in accordance with a capacity of said first rechargeable battery (4a) and/or of said second rechargeable battery (4b).

According to a further non-limiting aspect, in accordance with any one of the seven preceding aspects, the data processing unit (103) is configured to receive from said first rechargeable battery (4a) and/or from said second rechargeable battery (4b) and/or to electronically derive as a function of at least one of a current, internal resistance and/or charging voltage value of said first rechargeable battery (4a) and/or of said second rechargeable battery (4b), preferably by means of said first station (101) and said second station (102), at least one total capacity value (Ctot) of said first rechargeable battery (4a) and/or of said second rechargeable battery (4b).

According to a further non-limiting aspect, in accordance with any one of the eight preceding aspects, said first predetermined charging value (R₁) is determined as a predetermined percentage of said total capacity value (Ctot).

According to a further non-limiting aspect, in accordance with the preceding aspect, said percentage is preferably at least 10% or at least 15% or at least 20% of said total capacity (Ctot).

According to a further non-limiting aspect, in accordance with any one of the preceding aspects, the battery charger (100) is configured to actuate a further charging configuration (or second charging configuration), at said use condition in which said first rechargeable battery (4a) and said second rechargeable battery (4b) are connected to the first station (101) and to the second station (102), respectively.

According to a further non-limiting aspect, according to the preceding aspect, in the further charging configuration the data processing unit (103) controls a simultaneous activation and/or power supply of said first station (101) and said second station (102) so that said first rechargeable battery (4a) and said second rechargeable battery (4b) are simultaneously charged.

According to a further non-limiting aspect, in accordance with any one of the two preceding aspects, said data processing unit (103) determines, preferably automatically determines, a transition from said first charging configuration to said second or further charging configuration when the charge level of said first rechargeable battery (4a) and the charge level of said second rechargeable battery (4b) both exceed said threshold charging value (300).

According to a further non-limiting aspect, in accordance with any one of the preceding aspects, the battery charger (100) is configured to actuate a charge maintenance configuration, at said use condition in which said first rechargeable battery (4a) and said second rechargeable battery (4b) are connected to said first station (101) and to said second station (102), respectively.

According to a further non-limiting aspect, in accordance with the preceding aspect, in said charge maintenance configuration, said data processing unit (103) electronically measures, at predefined time intervals, at least one among a charge and/or voltage level of said first rechargeable battery (4a) and/or of said second rechargeable battery (4b).

According to a further non-limiting aspect, in accordance with any one of the two preceding aspects, in said charge maintenance configuration, if said charge level and/or said voltage fall below a minimum charge level and/or below a minimum voltage level, respectively, said data processing unit (103) determines, preferably automatically determines, a transition from said charge maintenance configuration to said charging configuration or to said further charging configuration.

According to a further non-limiting aspect, in accordance with any one of the preceding aspects, said battery charger (100) comprises a power supply stage (104) operatively connected to said first station (101), to said second station (102) and to said data processing unit (103), in which said power supply stage (104) is configured to provide electrical power supply to said first station (101), to said second station (102) and to said data processing unit (103).

According to a further non-limiting aspect, in accordance with any one of the preceding aspects, said battery charger (100) is configured to prevent the electrical supply of at least one of said first station (101), said second station (102) and said data processing unit (103) with electrical energy provided by said first rechargeable battery (4a) and/or by said second rechargeable battery (4b).

According to a further non-limiting aspect, in accordance with any one of the preceding aspects, said battery charger (100) is configured to actuate a wake configuration at said use condition in which said first rechargeable battery (4a) and said second rechargeable battery (4b) are connected to the first station (101) and the second station (102), respectively.

According to a further non-limiting aspect, in accordance with the preceding aspect, in said wake configuration, said first station (101) and said second station (102) do not deliver electrical energy to said first rechargeable battery (4a) and to said second rechargeable battery (4b) do not receive electrical energy from said first station (101) and/or from said second station (102).

According to a further non-limiting aspect, in accordance with any one of the preceding aspects, said data processing unit (103) controls said first station (101) and said second station (102) so as to inhibit a flow of electrical energy from said first rechargeable battery (4a) and from said second rechargeable battery (4b), to said first station (101) and to said second station (102) and preferably further to said data processing unit (103).

According to a further non-limiting aspect, in accordance with any one of the preceding aspects, said charging configuration and/or said further charging configuration and/or said charge maintenance configuration and/or said wake configuration are mutually exclusive with each other.

In accordance with the present disclosure, a method is further disclosed for charging tool batteries by means of a battery charger (100), said method being executable at a use condition in which a first rechargeable battery (4a) and a second rechargeable battery (4b) are connected respectively to a first station (101) of said battery charger (100) and to a second station (102) of said battery charger (100), said method comprising:
- a supply of electrical energy to said first rechargeable battery (4a) connected to said first station (101) of said battery charger (100),
- a supply of electrical energy to said second rechargeable battery (4b) connected to said second station (102) of said battery charger (100),
- a control of a data processing unit (103) of said battery charger (100), said data processing unit (103) being operatively connected to said first station (101) and to said second station (102),

in which said control comprises and determines, in a charging configuration, occurring at said use condition, at least a first switching (200) from a state of an activation of said first station (101) to a state of activation of said second station (102), and a second switching (200) from a state of an activation of said second station (102) to a state of activation of said first station (101), so that said first rechargeable battery (4a) and said second rechargeable battery (4b) are alternately charged with each other.

According to a further non-limiting aspect, in accordance with the preceding aspect, in said method, said control comprises and determines an automatic transition between said first and said second switching (200).

According to a further non-limiting aspect, in accordance with any one of the two preceding aspects, as a result of said first switching (200) said first station (101) is activated and/or powered alternatively to said second station (102).

According to a further non-limiting aspect, in accordance with any one of the three preceding aspects, as a result of said second switching (200) said second station (102) is activated and/or powered alternatively to said first station (101).

According to a further non-limiting aspect, in accordance with any one of the four preceding aspects, said control comprises and determines a loading from a memory (106) and/or a reception from an external data source (105), at least one electronic datum indicating a first predetermined charging value (R₁) or charging time (T₁).

According to a further non-limiting aspect, in accordance with any one of the five preceding aspects, said control determines, in said charging configuration, a maintenance by said data processing unit (103) of said first rechargeable battery (4a) or, alternatively, said second rechargeable battery (4b), constantly charging until the charging has reached the first predetermined charging value (R₁) or until the charging time has reached the first predetermined charging time value (T₁).

According to a further non-limiting aspect, in accordance with any one of the six preceding aspects, said control determines, in said charging configuration, a reiteration by said data processing unit (103), of said first switching (200) and said second switching (200) until reaching a threshold charging value (300) in said first rechargeable battery (4a) and/or in said second rechargeable battery (4b).

According to a further non-limiting aspect, in accordance with any one of the seven preceding aspects, in said method, in the charging configuration, the charging of said at least a first rechargeable battery (4a) and/or said at least a second rechargeable battery (4b) takes place with a direct current, or with an alternating current, preferably reducing as the total charge increases, preferably in which in said charging configuration the charging of said at least a first rechargeable battery (4a) and/or said at least a second rechargeable battery (4b) takes place with said direct current.

According to a further non-limiting aspect, in accordance with any one of the eight preceding aspects, by means of said control, the data processing unit (103) receives from said first rechargeable battery (4a) and/or from said second rechargeable battery (4b) and/or electronically derives as a function of at least one of a current, internal resistance and/or charging voltage value of said first rechargeable battery (4a) and/or of said second rechargeable battery (4b), preferably by means of said first station (101) and said second station (102), at least one total capacity value (Ctot) of said first rechargeable battery (4a) and/or of said second rechargeable battery (4b).

According to a further non-limiting aspect, in accordance with any one of the nine preceding aspects, the method comprises actuating a further charging configuration, at said use condition in which said first rechargeable battery (4a) and said second rechargeable battery (4b) are connected to the first station (101) and to the second station (102), respectively.

According to a further non-limiting aspect, in accordance with the preceding aspect, in the further charging configuration (or second charging configuration) the data processing unit (103) controls a simultaneous activation and/or power supply of said first station (101) and said second station (102) so that said first rechargeable battery (4a) and said second rechargeable battery (4b) are simultaneously charged.

According to a further non-limiting aspect, in accordance with any one of the two preceding aspects, said method comprises determining, by means of said data processing unit (103), preferably automatically, a transition from said first charging configuration to said second charging configuration when the charge level of said first rechargeable battery (4a) and the charge level of said second rechargeable battery (4b) both exceed said threshold charging value (300).

According to a further non-limiting aspect, in accordance with any one of the three preceding aspects, the method comprises for actuating a charge maintenance, at said use condition in which said first rechargeable battery (4a) and said second rechargeable battery (4b) are connected to said first station (101) and to said second station (102), respectively.

According to a further non-limiting aspect, in accordance with the preceding aspect, in said charge maintenance, said data processing unit (103) electronically measures, at predefined time intervals, at least one among a charge and/or voltage level of said first rechargeable battery (4a) and/or of said second rechargeable battery (4b).

According to a further non-limiting aspect, in accordance with any one of the two preceding aspects, during said charge maintenance, if said charge level and/or said voltage fall below a minimum charge level and/or below a minimum voltage level, respectively, said data processing unit (103) determines, preferably automatically determines, a transition from said charge maintenance configuration to said charging configuration or to said further charging configuration.

According to a further non-limiting aspect, in accordance with any one of the fifteen preceding aspects, the method comprises operatively connecting a power supply stage (104) to said first station (101), to said second station (102) and to said data processing unit (103), so that said power supply stage (104) provides electrical power supply to said first station (101), to said second station (102) and to said data processing unit (103).

According to a further non-limiting aspect, in accordance with any one of the sixteen preceding aspects, the method comprises preventing the electrical supply of at least one of said first station (101), said second station (102) and said data processing unit (103) with electrical energy provided by said first rechargeable battery (4a) and/or by said second rechargeable battery (4b).

According to a further non-limiting aspect, in accordance with any one of the seventeen preceding aspects, the method comprises actuating a wake configuration at said use condition in which said first rechargeable battery (4a) and said second rechargeable battery (4b) do not receive electrical energy from said first station (101) and/or from said second station (102).

According to a further non-limiting aspect, in accordance with any one of the eighteen preceding aspects, said control comprises, by means of said data processing unit (103) controlling said first station (101) and said second station (102) so as to inhibit a flow of electrical energy from said first rechargeable battery (4a) and from said second rechargeable battery (4b), to said first station (101) and to said second station (102) and preferably further to said data processing unit (103).

According to a further non-limiting aspect, in accordance with any one of the nineteen preceding aspects, the method comprises mutually exclusively actuating said charging configuration and/or said further charging configuration and/or said charge maintenance configuration and/or said wake configuration.

In accordance with the present disclosure, a battery charger (100) for tools is disclosed, in particular with power supply by means of rechargeable batteries, comprising:
- at least a first station (101), in particular a first charging port, configured to be operatively connected to, and supply electrical energy for charging at least a first rechargeable battery (4a) and a second station (102), in particular a second charging port, configured to be operatively connected to, and supply electrical energy for charging at least a second rechargeable battery (4b);
- a data processing unit (103), operatively connected to said first station (101) and to said second station (102);

the battery charger (100) having at least a first charging configuration, taking place when said at least a first rechargeable battery (4a) and said at least a second rechargeable battery (4b) are connected to the first station (101) and to the second station (102), respectively,
in which in the first charging configuration the data processing unit (103) executes a switching (200) of an activation and/or power supply between said first station (101) and said second station (102) so that said at least a first rechargeable battery (4a) and said at least a second rechargeable battery (4b) are, in use, alternately charged.

According to a further non-limiting aspect, in accordance with the preceding aspect, said switching (200) is automatic.

According to a further non-limiting aspect, in accordance with any one of the two preceding aspects, said switching (200) of an activation and/or power supply of said first station (101) and said second station (102) comprises an activation and/or power supply of said first station (101) alternatively to said second station (102) or vice versa.

According to a further non-limiting aspect, in accordance with any one of the three preceding aspects, said data processing unit (103) is configured to load from a memory (106) and/or to receive from an external data source (105), at least one electronic datum indicating a first predetermined charging value (R₁) or charging time (T₁).

According to a further non-limiting aspect, in accordance with the preceding aspect, in said first charging configuration said data processing unit (103) is configured to execute said switching (200) when said at least a first rechargeable battery (4a) and/or said at least a second rechargeable battery (4b) have reached at least said first charging value (R₁) or upon reaching said charging time (T₁).

According to a further non-limiting aspect, in accordance with any one of the two preceding aspects, said first charging value (R₁) is an incremental charging value.

According to a further non-limiting aspect, in accordance with any one of the three preceding aspects, in said first charging configuration, said data processing unit (103) is configured to keep said first rechargeable battery (4a) or, alternatively, said second rechargeable battery (4b), constantly charging until the charging has reached said first charging value or until the charging time has reached said predetermined charging time (T₁).

According to a further non-limiting aspect, in accordance with any one of the seven preceding aspects, said data processing unit (103) is configured to reiterate said switching (200).

According to a further non-limiting aspect, in accordance with the preceding aspect, as a consequence of said reiteration, said switching (200) takes place when said at least a first rechargeable battery (4a) and/or said at least a second rechargeable battery (4b) have reached at least a further first charging value (R₁) added to said first charging value (R₁), or when a further charging time (T₁) has been reached.

According to a further non-limiting aspect, in accordance with any one of the two preceding aspects, in said first charging configuration, said data processing unit (103) is configured to reiterate said switching (200) until reaching a threshold charging value (300).

According to a further non-limiting aspect, in accordance with the preceding aspect, said threshold charging value (300) is at least 70% of the total charge of said battery, or 80% of the total charge of said battery, or 85% of the total charge of said battery, or 90% of the total charge of said battery or 100% of the total charge of said battery.

According to a further non-limiting aspect, in accordance with any one of the eleven preceding aspects, said battery charger (100) is configured to charge said at least a first rechargeable battery (4a) and/or said at least a second rechargeable battery (4b) with a direct current, or with an alternating current, preferably reducing as the overall charge increases, preferably in which in said first charging configuration said battery charger (100) is configured to charge said at least a first rechargeable battery (4a) and/or said at least a second rechargeable battery (4b) with said direct current.

According to a further non-limiting aspect, in accordance with any one of the nine preceding aspects, said first charging value (R₁) is defined in accordance with a power or current absorption of said tool and/or in accordance with a capacity of said at least a first rechargeable battery (4a) and/or of said at least a second rechargeable battery (4b).

According to a further non-limiting aspect, in accordance with any one of the ten preceding aspects, the data processing unit (103) is configured to receive from, and/or to electronically derive as a function of at least one of a current, internal resistance and/or charging voltage value of said at least a first rechargeable battery (4a) and/or said at least a second rechargeable battery (4b), preferably by means of said first station (101) and said second station (102), at least one overall capacity value (Cₜₒₜ) of said at least a first rechargeable battery (4a) and/or of said at least a second rechargeable battery (4b).

According to a further non-limiting aspect, in accordance with the preceding aspect, said first charging value (R₁) is determined as a predetermined percentage of said total capacity value (Cₜₒₜₐₗ).

According to a further non-limiting aspect, in accordance with the preceding aspect, said percentage is substantially equal to at least 10% or at least 15% or at least 20% of said total capacity (Cₜₒₜₐₗ).

According to a further non-limiting aspect, in accordance with any one of the sixteen preceding aspects, the battery charger (100) comprises a second charging configuration, taking place when said at least a first rechargeable battery (4a) and said at least a second rechargeable battery (4b) are connected to the first station (101) and to the second station (102), respectively.

According to a further non-limiting aspect, in accordance with the preceding aspect, in the second charging configuration the data processing unit (103) controls a simultaneous activation and/or power supply of said first station (101) and said second station (102) so that said at least a first rechargeable battery (4a) and said at least a second rechargeable battery (4b) are, in use, simultaneously charged.

According to a further non-limiting aspect, in accordance with any one of the two preceding aspects, said data processing unit (103) determines the switching from said first charging configuration to said second charging configuration when the charge level of said at least a first rechargeable battery (4a) and of said at least a second rechargeable battery (4b) exceeds said threshold charging value (300).

According to a further non-limiting aspect, in accordance with any one of the nineteen preceding aspects, the battery charger (100) comprises a charge maintenance configuration, preferably alternative to said first charging configuration, taking place when at least one between said at least a first rechargeable battery (4a) and said at least a second rechargeable battery (4b) is connected to at least one between said first station (101) and said second station (102).

According to a further non-limiting aspect, in accordance with the preceding aspect, in said charge maintenance configuration, said data processing unit (103) electronically measures, at predefined time intervals, at least one among a charge and/or voltage level of said at least a first rechargeable battery (4a) and/or of said at least a second rechargeable battery (4b).

According to a further non-limiting aspect, in accordance with any one of the two preceding aspects, in said charge maintenance configuration, if said charge level and/or said voltage fall below a minimum charge level and/or below a minimum voltage level, respectively, said data processing unit (103) automatically switches to said first charging configuration, or to said second charging configuration.

According to a further non-limiting aspect, in accordance with any one of the twenty-two preceding aspects, the battery charger (100) comprises a power supply stage (104) operatively connected to, and providing in use electrical power supply to said first station (101), said second station (102) and said data processing unit (103).

According to a further non-limiting aspect, in accordance with any one of the twenty-three preceding aspects, said battery charger (100) is configured to prevent the electrical supply of at least one of said first station (101), said second station (102) and said data processing unit (103) with electrical energy provided by at least a first rechargeable battery (4a) and/or by said at least a second rechargeable battery (4b).

According to a further non-limiting aspect, in accordance with any one of the twenty-four preceding aspects, said battery charger (100) comprises a wake operating configuration, alternative to at least said first charging configuration, and optionally alternative to said second charging configuration and to said charge maintenance configuration.

According to a further non-limiting aspect, in accordance with the preceding aspect, said wake operating configuration takes place when said at least a first rechargeable battery (4a) and said at least a second rechargeable battery (4b) are connected to the first station (101) and to the second station (102), respectively.

According to a further non-limiting aspect, in accordance with any one of the two preceding aspects, in said wake operating configuration, said at least a first rechargeable battery (4a) and/or said at least a second rechargeable battery (4b) do not receive electrical energy from said first station (101) and/or from said second station (102) and said data processing unit (103) controls said first station (101) and said second station (102), inhibiting a flow of electrical energy from said at least a first rechargeable battery (4a) and from said at least a second rechargeable battery (4b), towards at least one among said first station (101), said second station (102) and said data processing unit (103).

According to a further non-limiting aspect, in accordance with any one of the twenty-seven preceding aspects, said battery charger (100) is configured to be powered by a mains voltage, preferably an alternating voltage.

In accordance with the present disclosure, a method is further disclosed of recharging batteries by means of a battery charger (100) in accordance with one or more of the aspects disclosed herein.

In accordance with the present disclosure, a method of charging tool batteries by means of a battery charger (100) is further disclosed, comprising:
- a supply of electrical energy to at least a first rechargeable battery (4a) connected to a first station (101), in particular a first charging port, of said battery charger (100);
- a supply of electrical energy to at least a second rechargeable battery (4b) connected to a second station (102), in particular a second charging port, of said battery charger (100),
- a control of a data processing unit (103), operatively connected to said first station (101) and to said second station (102);
in which said control comprises and determines, in at least a first charging configuration, taking place when said at least a first rechargeable battery (4a) and said at least a second rechargeable battery (4b) are connected to the first station (101) and to the second station (102), respectively, an activation and/or power supply switching (200), by means of said data processing unit (103), of said first station (101) and said second station (102) determining a supply of said electrical energy to said at least a first rechargeable battery (4a) as an alternative to the supply of said electrical energy to said at least a second rechargeable battery (4b).

According to a further non-limiting aspect, in accordance with the preceding aspect, in said method, said switching (200) is automatic.

According to a further non-limiting aspect, in accordance with any one of the two preceding aspects, in said method, said switching (200) of an activation and/or power supply of said first station (101) and said second station (102) comprises an activation and/or power supply of said first station (101) alternatively to said second station (102) or vice versa.

According to a further non-limiting aspect, in accordance with any one of the three preceding aspects, the method comprises a loading step, performed by or by means of said data processing unit (103) in which said data processing unit (103) loads from a memory (106) and/or receives from an external data source (105), at least one electronic datum indicating a first predetermined charging value (R₁) or charging time (T1).

According to a further non-limiting aspect, in accordance with any one of the four preceding aspects, said control comprises and determines, in said first charging configuration, to keep said first rechargeable battery (4a) or, alternatively, said second rechargeable battery (4b) constantly charging until said first charging value (R1) has been reached or until the charging time has reached said predetermined charging time (T1).

According to a further non-limiting aspect, in accordance with any one of the five preceding aspects, said switching (200) executed by said data processing unit (103) in said first charging configuration, takes place when said at least a first battery (4a) and/or said at least a second battery (4b) have reached at least said first charging value or upon reaching said charging time.

According to a further non-limiting aspect, in accordance with any one of the six preceding aspects, the control of said data processing unit (103) comprises, in said first charging configuration, a reiteration of said switching (200).

According to a further non-limiting aspect, in accordance with the preceding aspect, as a consequence of said reiteration, said switching (200) takes place when said at least a first rechargeable battery (4a) and/or said at least a second rechargeable battery (4b) have reached at least a further first charging value (R₁) added to said first charging value (R₁), or when a further charging time (T₁) has been reached.

According to a further non-limiting aspect, in accordance with any one of the two preceding aspects, the control of said data processing unit (103) comprises, in said first charging configuration, a reiteration of said switching (200) until a threshold charging value (300) is reached.

According to a further non-limiting aspect, in accordance with the preceding aspect, said threshold charging value (300) is at least 70% of the total charge of said battery, or 80% of the total charge of said battery, or 85% of the total charge of said battery, or 90% of the total charge of said battery or 100% of the total charge of said battery.

According to a further non-limiting aspect, in accordance with any one of the ten preceding aspects, the method comprises charging said at least a first rechargeable battery (4a) and/or said at least a second rechargeable battery (4b) with a direct current, or with an alternating current, preferably decreasing with the growth of the total charge.

According to a further non-limiting aspect, in accordance with the preceding aspect, in the method, in said first charging configuration the method comprises charging said at least a first rechargeable battery (4a) and/or said at least a second rechargeable battery (4b) with said direct current.

According to a further non-limiting aspect, in accordance with any one of the nine preceding aspects, said first charging value (R₁) is defined in accordance with a power or current absorption of said tool and/or in accordance with a capacity of said at least a first rechargeable battery (4a) and/or of said at least a second rechargeable battery (4b) and/or comprises a receiving step in which the data processing unit (103) receives from, and/or electronically derives as a function of at least one of a current, an internal resistance and/or a charging voltage value of said at least a first rechargeable battery (4a) and/or said at least a second rechargeable battery (4b), preferably by means of said first station (101) and said second station (102), at least a total capacity value (Cₜₒₜ) of said at least a first rechargeable battery (4a) and/or of said at least a second rechargeable battery (4b).

According to a further non-limiting aspect, in accordance with any one of the ten preceding aspects, the method comprises determining said first charging value (R₁) as a predetermined percentage of said total capacity value (Cₜₒₜ).

According to a further non-limiting aspect, in accordance with the preceding aspect, said percentage is preferably substantially equal to at least 10% or at least 15% or at least 20% of said total capacity (Cₜₒₜ).

According to a further non-limiting aspect, in accordance with any one of the fifteen preceding aspects, said control comprises and determines, in at least a second charging configuration, taking place when said at least a first rechargeable battery (4a) and said at least a second rechargeable battery (4b) are connected to the first station (101) and to the second station (102), respectively, an activation and/or power supply, by means of said data processing unit (103), of said first station (101) and said second station (102) determining a simultaneous supply of said electrical energy to said at least a first rechargeable battery (4a) and to said at least a second rechargeable battery (4b).

According to a further non-limiting aspect, in accordance with any one of the eight preceding aspects, the method comprises a switching from said first charging configuration to said second charging configuration, managed by said data processing unit (103) and taking place when the charge level of said at least a first rechargeable battery (4a) and of said at least a second rechargeable battery (4b) exceeds said threshold charging value (300).

According to a further non-limiting aspect, in accordance with any one of the two preceding aspects, the method comprises a charge maintenance step, preferably taking place alternatively to said first charging configuration and/or to said second charging configuration, and taking place when at least one between said at least a first rechargeable battery (4a) and said at least a second rechargeable battery (4b) is connected to at least one between said first station (101) and said second station (102).

According to a further non-limiting aspect, in accordance with the preceding aspect, in said charge maintenance step, said data processing unit (103) electronically measures, at predefined time intervals, at least one among a charge and/or voltage level of said at least a first rechargeable battery (4a) and/or of said at least a second rechargeable battery (4b).

According to a further non-limiting aspect, in accordance with any one of the two preceding aspects, in said charge maintenance step, if said charge level and/or said voltage fall below a minimum charge level and/or below a minimum voltage level, respectively, said data processing unit (103) automatically switches to said first charging configuration, or to said second charging configuration.

According to a further non-limiting aspect, in accordance with any one of the twenty preceding aspects, the method comprises an activation of a power supply stage (104) and an electrical power supply of said first station (101), said second station (102) and said data processing unit (103) by means of said power supply stage (104).

According to a further non-limiting aspect, in accordance with any one of the twenty-one preceding aspects, said method comprises a step of inhibiting the electrical power supply of at least one of said first station (101), said second station (102) and said data processing unit (103) with electrical energy provided by at least a first rechargeable battery (4a) and/or by said at least a second rechargeable battery (4b).

According to a further non-limiting aspect, in accordance with any one of the twenty-two preceding aspects, said control comprises a switching to a wake phase, alternative to at least said first charging configuration, and optionally alternative to said second charging configuration and to said charge maintenance phase.

According to a further non-limiting aspect, in accordance with the preceding aspect, said wake phase takes place when said at least a first rechargeable battery (4a) and said at least a second rechargeable battery (4b) are connected to the first station (101) and to the second station (102), respectively.

According to a further non-limiting aspect, in accordance with any one of the two preceding aspects, in said wake phase said at least a first rechargeable battery (4a) and/or said at least a second rechargeable battery (4b) do not receive electrical energy from said first station (101) and/or from said second station (102) and said data processing unit (103) controls said first station (101) and said second station (102), inhibiting a flow of electrical energy from said at least a first rechargeable battery (4a) and from said at least a second rechargeable battery (4b), towards at least one among said first station (101), said second station (102) and said data processing unit (103).

According to a further non-limiting aspect, in accordance with any one of the twenty-five preceding aspects, the method comprises supplying said battery charger (100) with a mains voltage, preferably an alternating voltage.

In accordance with the present disclosure, a computer program is further disclosed herein, comprising portions of software code which, when run by a data processing unit, cause the method to be executed in accordance with to one or more of the aspects of the method previously disclosed.

In accordance with the present disclosure, the use of the battery charger (100) in accordance with one or more of the aspects disclosed herein for charging rechargeable batteries intended for gardening or agricultural devices is also disclosed.

In accordance with the present disclosure, the use of the battery charger (100) in accordance with one or more of the aspects disclosed above for charging rechargeable lithium batteries is also disclosed.

### Figures

The present disclosure continues with the disclosure of some embodiments of the object of the present disclosure, which are disclosed with reference to the attached figures.

A brief disclosure of the figures is given below.
Figure 1 illustrates a block diagram of an embodiment of a battery charger which is the subject matter of the present disclosure.
Figure 2 illustrates a basic diagram from which it is possible to deduce a charging mode of a first rechargeable battery as an alternative to charging a second rechargeable battery.
Figure 3 illustrates a basic diagram from which it is possible to deduce a simultaneous charging mode of a first rechargeable battery with the second rechargeable battery.
Figure 4 illustrates a block diagram of a particular embodiment in which the charging data are provided by an external source other than the rechargeable batteries.
Figure 5 illustrates a block diagram of a particular embodiment in which the charging data are provided by an external source included in at least one of the two rechargeable batteries.
Figure 6 illustrates a block diagram of a particular embodiment of a method for charging rechargeable batteries.
Figures 7 and 8 illustrate respective block diagrams of operating alternatives of a substantially conclusive part of a charging process of rechargeable batteries.
Figure 9 illustrates a pair of charging percentage diagrams of a first and a second rechargeable battery.

### Detailed description

With reference to the attached figures, the reference numeral 100 indicates a non-limiting embodiment of a battery charger.

The battery charger 100 is intended to be operatively connected with batteries for a tool having a power user electrically powered with the aforesaid batteries. The battery charger 100 is therefore specifically intended to be used for tools of the type known as rechargeable batteries.

In a non-limiting embodiment such a tool is configured to be hand-held, and/or to be at least partially worn, and is preferably a device for cutting the lawn, in particular a lawnmower, optionally automatic, or device for trimming lawns and hedges, in particular a hedge trimmer or a turf trimmer or a brush cutter, or a device for timber and pruning, in particular a branch cutter, or a bio-grinder, or a chainsaw, or a cleaning device, in particular a blower or aspirator, or a shredder, or a pressure washer, or a sweeper or a snow plough, or a device for preparing soil, in particular an aerator or scarifier or a tiller, or a device for irrigating or distributing substances, in particular a sprinkler, or a pump or an atomiser, or a pump for distributing anti-fungal substances. Such a device can further be a lawnmower tractor.

The battery charger 100 comprises a first station 101 and a second station 102, different with respect to the first station. The first and the second station 101, 102 can both be arranged on a common support and therefore arranged in a fixed position with respect to each other or be movable with respect to each other, being arranged in any case on a common support, or not.

The first and the second station 101, 102 can be configured to accommodate in a predefined portion at least one respective rechargeable battery, and for this reason can be provided with guides and abutments adapted to allow the rechargeable battery to be directed in a translational, rotational, or roto-translational movement until reaching an operative recharging position in which the contacts of the rechargeable battery are near, preferably in contact, with contacts of the station for transferring electrical energy intended to charge the battery.

The first and the second station 101, 102 can be adapted to allow the charging of the rechargeable batteries by means of a direct electrical connection or by means of electromagnetic coupling charging.

In a further and alternative embodiment, at least one between the first and the second station 101, 102 does not have a real seat but simply a part of the electronics, in particular a connector, intended to be removably coupled with a respective rechargeable battery.

In a non-limiting embodiment, the rechargeable battery is a lithium-ion battery. In particular, although not limitingly, the lithium battery can be a Lithium - Cobalt - Oxide (LiCoO₂), Lithium - Manganese - Oxide (LiMn₂O₄), Lithium - Iron - Phosphate (LiFePO₄), Lithium with Nickel - Manganese - Cobalt (LiNiₓMn_{y}Co_{z}O₂) or Lithium with Nickel - Cobalt - Aluminium (LiNiCoAlO₂) or Lithium titanate (Li₄Ti₅O₁₂) battery.

The battery charger 100 further comprises a data processing unit 103. The data processing unit, or controller, can be a general purpose processor specifically configured for performing one or more parts of the process identified in the present disclosure through the software or firmware program, or be a dedicated ASIC or processor or an FPGA, specifically programmed to perform at least part of the operations of the process described herein.

Parts of the process described herein can be carried out by a data processing unit, or controller, technically replaceable with one or more electronic computers designed to perform a portion of software program or firmware loaded on a memory medium. Such a software program can be written in any programming language of known type. Such a computer program is therefore considered part of the present disclosure.

The data processing unit 103 is operatively connected with the first station 101 and with the second station 102, and is in particular electrically connected with the first station 101 and with the second station 102.

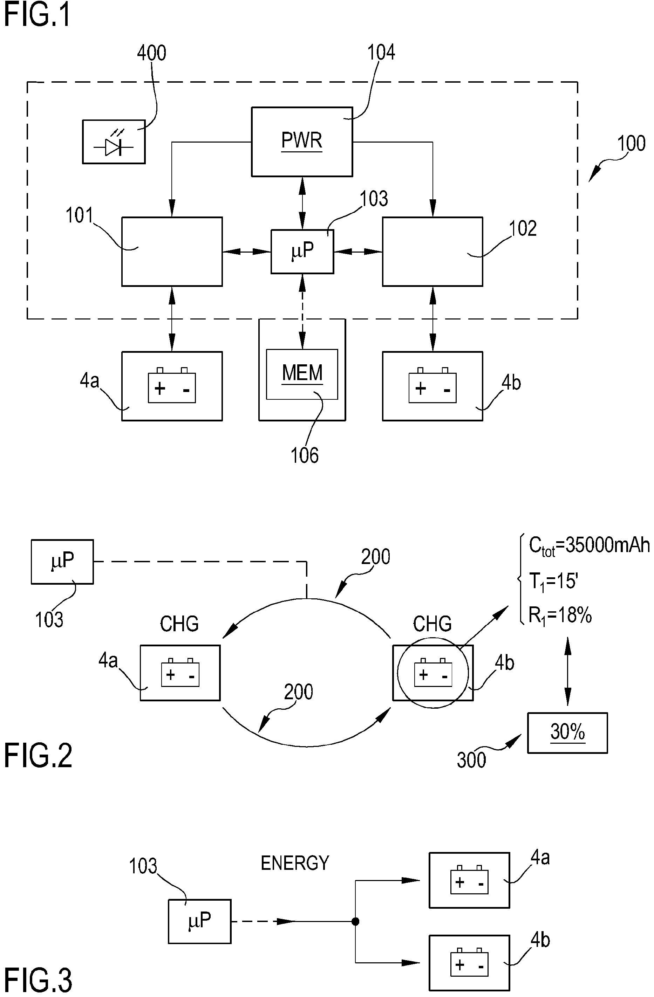

In a preferred embodiment, the battery charger 100 which is the subject matter of the present disclosure power stage 104. In particular, the power stage 104 can be common to both the first station 101 and the second station 102 (solution depicted in figure 1) or be physically divided between the first station 101 and the second station 102.

In an embodiment, the power stage 104 comprises at least one voltage lowering transformer and/or comprises a rectifier, configured to transform an alternating voltage to a direct voltage. The power stage 104 is directly connected to the mains source, preferably a 220V, 50/60 Hz mains source. It is clear that the battery charger 100 which is the subject matter of the present disclosure is therefore intended to be powered by, and directly connected to, a mains source, in particular domestic.

The data processing unit 103 is operatively connected with the power stage 104, and is in particular electrically connected with the power stage 104.

The battery charger 100 which is the subject matter of the present disclosure also comprises a memory 106, operatively (preferably, electrically) connected with the data processing unit 103. Although in figure 1 such a memory 106 is represented as a device in its own right with respect to the data processing unit 103, this configuration must not be understood as unique. Indeed, the Applicant has devised an embodiment where the memory 106 is integrally included within the data processing unit 103.

Figure 1 illustrates a first rechargeable battery 4a connected with the first station 101 and a second rechargeable battery 4b connected with the second station 102.

The battery charger 100 which is the subject matter of the present disclosure has a first charging configuration. Such a first charging configuration takes place in a use condition in the first rechargeable battery 4a and the second rechargeable battery 4b are connected to the first station 101 and the second station 102, respectively.

The first charging configuration takes place when at least a first rechargeable battery 4a and at least a second rechargeable battery 4b are connected to the first station 101 and the second station 102, respectively, so that the contacts of the station and the battery are operatively coupled to allow the transfer of electrical energy intended for charging the battery.

In the first charging configuration, the data processing unit 103 executes a switching (indicated with the reference numeral 200, for example in figure 2) of an activation and/or power supply of said first station 101 and said second station 102 so that said at least a first rechargeable battery 4a and said at least a second rechargeable battery 4b are, in use, alternately charged.

In particular, in the charging configuration, the data processing unit 103 executes or imposes at least a first switching 200 from a state of an activation of said first station 101 to a state of activation of said second station 102 and a second switching 200 from a state of activation of said second station 102 to a state of activation of said first station 101, so that the first rechargeable battery4a and the second rechargeable battery 4b are, in said use condition, alternately charged with each other.

The aforementioned switching is automatic, in particular fully automatic. The data processing unit 103, for example by means of its computer program, automatically manages the alternative switching between the activation and/or power supply of the first station 101 and the activation and/or power supply of the second station 102. Therefore, the intervention of an operator is not required for the aforesaid switching, in particular when it is fully automatic. In particular, both the first and the second switching mentioned above are operated, by means of the data processing unit 103, automatically.

The term "activation and/or power supply" is used since where the first and/or the second station 101, 102 are substantially devoid of electronics, the latter being contained in the power stage 104, the aforesaid first and/or second station 101, 102 will be powered by the power stage 104; otherwise, where the first and/or the second station 101, 102 include a relative and significant portion of power electronics, these will be activated by the data processing unit 103 and will draw electrical power from the power stage 104.

In an embodiment, the first and the second station 101, 102 can be positioned on a support which is connected to the power stage 104 via cable. Such a support can be a support adapted to be fixed, for example in a fixed position, on a wall. It is thus clear that the present disclosure illustrates a battery charger 100 of the type configured to be fixed to a wall.

The power stage can be a voltage lowering adapter, operatively removably connectable to the first and the second station 101, 102. For the purposes of the present disclosure, by "operatively removably connectable" understood with reference to the power stage 104, it is meant that such a power stage can be connected and disconnected from the first and the second station 101, 102 during the normal use of the device, without the need for particular expedients and tools, therefore by the common user.

It is therefore clear that the present disclosure relates to a method of charging batteries for tools with rechargeable batteries by means of a battery charger 100, comprising first of all an operating connection of at least a first rechargeable battery 4a to the first station 101 and of at least a second rechargeable battery 4b to the second station 102.

The method which is the subject matter of the present disclosure can be executed at a first use condition in which the first rechargeable battery 4a and the second rechargeable battery 4b are connected to the first station 101 and the second station 102.

The method disclosed herein comprises a supply of electrical energy to at least a first rechargeable battery 4a connected to the first station 101 of said battery charger 100.

The method comprises a supply of electrical energy to at least a second rechargeable battery 4b connected to said second station 102 of said battery charger 100.

The method comprises a control of the data processing unit 103, operatively connected to said first station 101 and to said second station 102.

The control comprises and determines, in at least a first charging configuration (or simply "charging configuration"), taking place when the at least a first rechargeable battery 4a and the at least a second rechargeable battery 4b are connected to the first station 101 and the second station 102, respectively, and therefore in said use configuration, a switching 200 of activation and/or power supply, by means of said data processing unit 103, of the first station 101 and the second station 102. The activation and/or power supply mentioned above determines a supply of said electrical energy to said at least a first rechargeable battery 4a as an alternative to the supply of said electrical energy to said at least a second rechargeable battery 4b.

The method specifically comprises and determines a first switching 200 from a state of an activation of said first station 101 to a state of activation of said second station 102 and a second switching 200 from a state of an activation of said second station 102 to a state of activation of said first station 101.

It therefore appears that the first rechargeable battery 4a and the second rechargeable battery 4b are charged alternately, and in particular in a non-limiting embodiment, the instant of interruption of the charging of the first rechargeable battery 4a coincides with the instant of beginning the charging of the second rechargeable battery 4be and vice versa.

Thanks to this technical feature, it is possible to size the electronics of the battery charger 100 more flexibly; in fact, it is not necessary to be able to manage very high charging powers (in particular charging currents), typical of a simultaneous charging of several rechargeable batteries; on the contrary, the electronics of the battery charger 100 can be sized more limitedly, therefore being subject to lower production costs. The battery charger 100, costing less, impacts less on the sale of a tool of limited cost, and impacts the end user less where it is to be purchased separately with respect to the tool.

Electronics capable of managing large flows of power and, in particular, electric current, are typically large in size. Therefore, with the above-described technical features, in addition to the above-described effects, it is possible to obtain a reduction in the overall sizes of the battery charger 100 with respect to a same battery charger which, although provided with an equal number of stations, is configured to charge rechargeable batteries in parallel (i.e., simultaneously). In an embodiment the electric current used for recharging the first and the second rechargeable battery 4a, 4b can be equally distributed between the first rechargeable battery 4a and the second rechargeable battery 4b.

The data processing unit 103 is configured to load from the memory 106 and/or to receive from an external data source 105, at least one electronic datum indicating a first predetermined charging value R₁ or charging time T₁. On the basis of said electronic datum, the time instants in which the data processing unit 103 determines the switching between the supply of electrical energy for charging the at least a first rechargeable battery 4a and the supply of electrical energy for charging the at least a second rechargeable battery 4b are calculated electronically.

It is noted in particular that in said first charging configuration, the data processing unit 103 is configured to keep said first rechargeable battery 4a or, alternatively, said second rechargeable battery 4b, constantly charging until the charging has reached said first charging value R₁ or until the charging time has reached said predetermined charging time T₁.

Upon switching, the charging time T₁ or the charging value R₁ can be reset, and in this case these are predetermined charging times and/or incremental charging values R₁ with respect to an overall charging time already carried out and/or with respect to a charging value already possessed by the rechargeable battery.

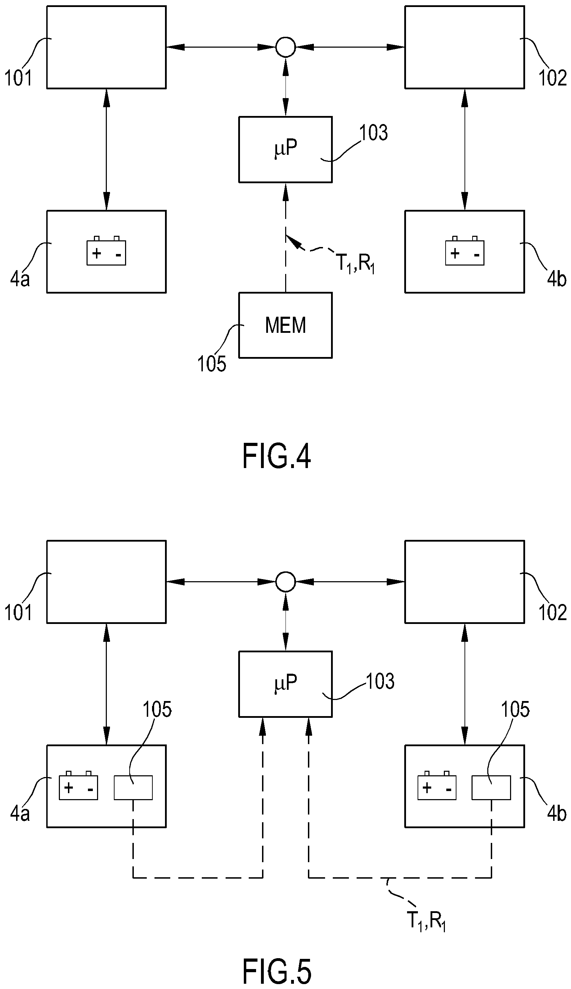

Figure 4 illustrates a particular configuration in which the external data source 105 is for example a server outside the battery charger 100, or a portable electronic device of an operator or is part of, or connected with, the tool.

Figure 5 illustrates a configuration in which the external data source 105 is part of the first rechargeable battery 4a and the second rechargeable battery 4b, which are therefore to be considered smart rechargeable batteries and capable of electronically providing a data processing unit with a plurality of electronic data indicative of their electrical features or associated with their electrical features.

In the first charging configuration, said data processing unit 103 is configured to execute the switching 200 when said at least a first rechargeable battery 4a and/or said at least a second rechargeable battery 4b have reached at least said first charging value R₁, or upon reaching said charging time T₁. Adequate measurement instruments are provided to allow the aforesaid values to be detected. Correspondingly, in the method in accordance with the present disclosure the switching 200 executed by means of said data processing unit 103, in said first charging configuration takes place when the at least a first rechargeable battery 4a and/or the at least a second rechargeable battery 4b has reached at least said first charging value or upon when reaching said charging time.

Thanks to this technical feature, the first charging part of the first rechargeable battery 4a and, subsequently, of the second rechargeable battery 4b, occurs only when a sufficient charge level has been reached to ensure a correct operation of the tool on which the rechargeable battery is installed, although such a correct operation can be ensured for a rather limited time.

Preferably, but not limitedly, the first charging value R₁ is equal to 15% of the overall battery charge, or is equal to 20% of the overall battery charge, or is equal to 25% of the overall battery charge.

In a non-limiting embodiment, in said first charging configuration, the data processing unit 103 is configured to reiterate said switching 200 until reaching a threshold charging value 300. Therefore, in an embodiment, the reiteration of the charging of the first rechargeable battery (and also of the second rechargeable battery) allows to bring the total charge of each rechargeable battery to the following levels: 15%, 30%, 45%, and so on, or 20%, 40%, 60%, and so on, or 25%, 50%, 75%, and so on.

In an embodiment the first charging value R₁ is fixed, i.e., permanently stored and thus accessible by the data processing unit 103. In an alternative embodiment, the first charging value R₁ is instead variable, and is in particular modifiable by the operator.

The data processing unit 103, and/or the first and/or the second station 101, 102 are configured to allow an electronic detection of the charging value of the rechargeable battery and to allow an electronic comparison between the current charging value and the threshold charging value 300. Said electronic detection can be carried out for example by means of a measurement of a current value absorbed by the rechargeable battery under measurement.

Preferably, said threshold charging value 300 is at least 70% of the total charge of said battery, or 80% of the total charge of said battery, or 85% of the total charge of said battery, or 90% of the total charge of said battery or 100% of the total charge of said battery.

This means that in use, the battery charger 100 of the present disclosure repeatedly switches, or reiterates, between a partial charge of the first rechargeable battery 4a and a partial charge of the second rechargeable battery 4b until a sufficient charge level has been reached to ensure a good operating time of the tool.

Entering the technical merit, the first charging value R₁ is defined, for example:
- in accordance with a power or current absorption of said tool, and/or
- in accordance with a capacity of said at least a first rechargeable battery 4a and/or of said at least a second rechargeable battery 4b.

For example, it can be established that since the tool absorbs a current of 10A, and that a minimum operating time must be 0.25 h (15'), a minimum charging value before switching 200 from the first rechargeable battery to the second rechargeable battery must be equal to 2.5Ah, or for safety, 3.5Ah.

Alternatively or in combination with the above, the data processing unit 103 is configured to receive from, and/or to derive electronically as a function of at least one of a current, internal resistance and/or charging voltage value of said at least a first rechargeable battery 4a and/or said at least a second rechargeable battery 4b, and/or at least an overall capacity value Cₜₒₜ of said at least a first rechargeable battery (4a) and/or of said at least a second rechargeable battery 4b.

In a non-limiting embodiment, the first station 101 and said second station 102 are provided with sensor elements adapted to determine the current, internal resistance and/or charging voltage parameters of the battery and/or said overall capacity.

Said first charging value R₁ is determined as a predetermined percentage of the total capacity value Cₜₒₜ; although this must not be understood in a limiting manner, the percentage is preferably substantially equal to at least 10% or at least 15% or at least 20% of said total capacity Cₜₒₜ.

In a particular embodiment, the battery charger 100 of the present disclosure is provided with an indicator 400 configured to inform the operator of the switching 200. In particular, the indicator 400 is configured to inform the operator of having reached the first charging value R₁ during at least the first charging cycle of the first rechargeable battery 4a or of the second rechargeable battery 4b.

In an embodiment, the indicator 400 is an LED, which is preferably activated when the battery being charged (first rechargeable battery 4a or second rechargeable battery 4b) has reached a charge level at least equal to 15% of the overall battery charge, or at least equal to 20% of the overall battery charge, or at least equal to 25% of the overall battery charge.

In an alternative embodiment, the battery charger 100 which is the subject matter of the present disclosure is devoid of the aforesaid indicator 400, which in contrast is provided on the rechargeable batteries. It is therefore clear that in this case the battery charger 100 is configured to determine the activation of the indicator 400 on the first rechargeable battery 4a and/or on the second rechargeable battery 4b.

A particular embodiment of the battery charger 100 which is the subject matter of the present disclosure and, consequently of the method disclosed herein, can be such as to comprise a further (second) charging configuration. Schematically, the second charging configuration is depicted in figure 3.

The second charging configuration, also defined herein as "further charging configuration", takes place when said at least a first rechargeable battery 4a and said at least a second rechargeable battery 4b are connected respectively to the first station 101 and to the second station 102.

In the second charging configuration, the data processing unit 103 electronically controls a simultaneous activation and/or power supply of the first station 101 and the second station 102 so that the at least a first rechargeable battery 4a and the at least a second rechargeable battery 4b are, in use, simultaneously charged.

More preferably, the data processing unit 103 electronically determines the switching from the first charging configuration to the second charging configuration when the charge level of the at least a first rechargeable battery 4a and of the at least a second rechargeable battery4b exceeds said threshold charging value 300.

It is in fact known that certain rechargeable batteries are charged with a charging current which is not constant over time as a function of the charging percentage; in particular, as a charge level close to the maximum is reached, and therefore the electrical energy stored in the battery is close to that of the maximum capacity of the battery, the charging current decreases.

However, during a first charging step, in particular below a predefined charge percentage which can be estimated at around 70% - 80% of the maximum charge of the rechargeable battery, the charging current is kept constant. It can therefore be stated that the battery charger 100 which is the subject matter of the present disclosure is configured to supply electrical charging energy to the at least a first rechargeable battery 4a and at least to the second rechargeable battery 4b with a direct current, or with an alternating current, in particular decreasing as the charge percentage increases. In a clearly non-limiting embodiment, during the first charging step the current is kept direct.

Thus, a configuration is reached in which the electronics of the battery charger 100 which is the subject matter of the present disclosure is capable of managing the flow of power (in particular, current flow) to not only one but to a plurality of batteries; the battery charger 100, where configured to switch between the first and the second charging configurations, therefore becomes "hybrid" since it passes from an alternative charge to a simultaneous charge of several batteries.

In an embodiment, the battery charger 100 can have a charge maintenance configuration. Such a charge maintenance configuration is alternative to the first charging configuration, and where present, is also alternative to the second charging configuration.

The charge maintenance configuration takes place when at least one between said at least a first rechargeable battery 4a and said at least a second rechargeable battery 4b is connected to at least one between said first station 101 and said second station 102. This means that the charge maintenance configuration is also possible when, for example, the second rechargeable battery 4b has been removed from the respective station.

In the charge maintenance configuration, the data processing unit 103 electronically measures, at predefined time intervals, at least one among a charge and/or voltage level of said at least a first rechargeable battery 4a and/or of said at least a second rechargeable battery 4b.

Non-limiting examples of such predefined time intervals are for example 1.5h or 2h, or 2.5h or even much longer times, for example around 8-10h. In fact, the modern rechargeable batteries typically have very low self-consumption currents.

In the charge maintenance configuration, if the charge level and/or the voltage measured at the terminals of the rechargeable battery respectively drops below a minimum charge level and/or below a minimum voltage level, the data processing unit 103 automatically switches to said first charging configuration, or to said second charging configuration.

It is noted that the battery charger 100 disclosed herein is configured to prevent the energy stored in the first rechargeable battery4a and/or the second rechargeable battery 4b from being dispersed to electrically power the first station 101, and/or the second station 102, and/or the data processing unit 103. This is particularly the case where the power stage 104 is not powered by the electrical power mains.

The battery charger 100 therefore comprises a wake configuration, alternative to at least said first charging configuration, and optionally alternative to the second charging configuration and the charge maintenance configuration. The wake configuration takes place when the at least a first rechargeable battery 4a and the at least a second rechargeable battery 4b are connected to the first station 101 and to the second station 102, respectively.

It is therefore clear that the present disclosure illustrates a method in which said charging configuration and/or said further charging configuration and/or said charge maintenance configuration and/or said wake configuration are actuated in a mutually exclusive manner. The same clearly applies to the specific configuration of use of the battery charger 100. In the wake operating configuration, the at least a first rechargeable battery 4a and/or the at least a second rechargeable battery 4b do not receive electrical energy from said first station 101 and/or from said second station 102, and the data processing unit 103 controls the first station 101 and the second station 102 by inhibiting, or in order to inhibit, a flow of electrical energy, and therefore a flow of an electric current or an electric power, from the first rechargeable battery 4a, and/or from the second rechargeable battery 4b, towards at least one between said first station 101, said second station 102 and said data processing unit 103.

In an embodiment, at least one among the first station 101 and the second station 102 has a polarity reversal protection device. In particular, said protection device is configured to detect an incorrect operating connection between the rechargeable battery and the respective station and to send a control signal to the data processing unit 103 so that the rechargeable battery is operatively disconnected, and the electrical energy supply flow to the battery is immediately and automatically interrupted, preventing the failure thereof.

Finally, it should be noted that in a non-limiting embodiment, the battery charger 100 which is the subject matter of the present disclosure is configured to allow a "hot" extraction of at least one among the at least a first rechargeable battery 4a and the at least a second rechargeable battery 4b. "Hot" implies that during the first charging configuration, and/or during the second charging configuration, and/or during one of the charge maintenance configuration and the wake configuration, each of the first rechargeable battery and the second rechargeable battery can simply be removed from its seat on the first station 101, or on the second station 102, without the need for particular and additional disconnection arrangements of the battery charger 100.

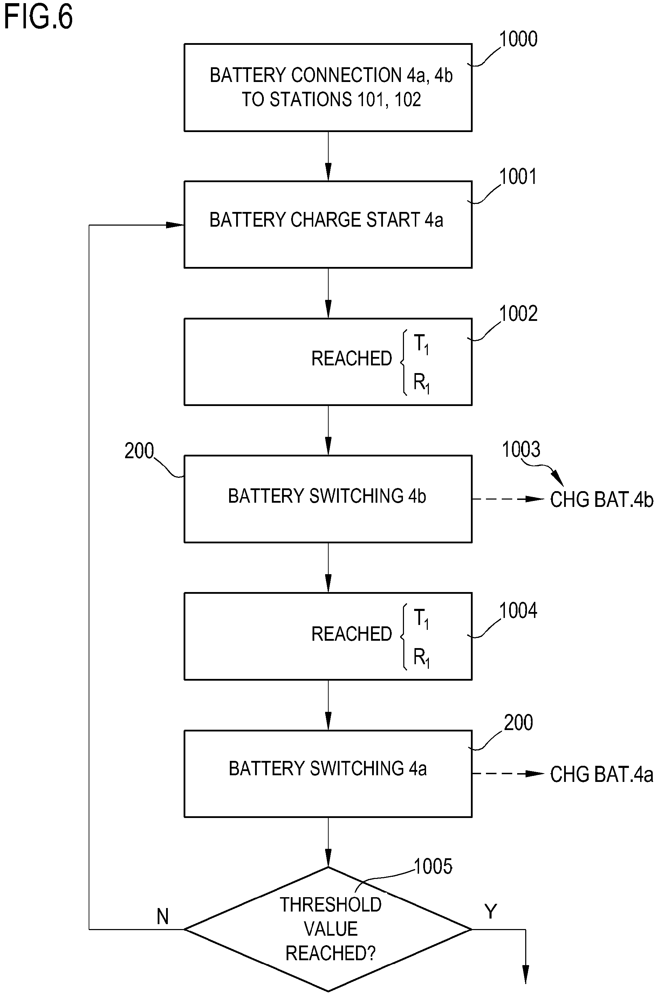

Figure 6 illustrates a block diagram of a non-limiting method in accordance with the present disclosure. The diagram of figure 6 is disclosed here in detail to provide the reader with a non-limiting example of the time sequence of the steps of the method.

The block 1000 identifies a connection step of the at least a first rechargeable battery 4a and the at least a second rechargeable battery 4b, to the first station 101 and to the second station 102, respectively.

The block 1001 identifies the start of the charging of the first rechargeable battery 4a. The start of the charging takes place clearly following the connection step and can be automatic following the connection or alternatively controlled by a switch managed by the user.

The block 1002 identifies reaching the first charging value R₁ or charging time T₁ for the first rechargeable battery 4a.

The block 200 identifies the switching step which takes place immediately and automatically following having reached said first charging value R1 or charging time T₁ for the first rechargeable battery 4a. At this point the battery charger 100 starts charging the second rechargeable battery 4b. Where an indicator 400 is present, this will be activated to indicate that it is possible to proceed with the removal of the first rechargeable battery 4a from the first station 101, and that this is available to allow the tool to be used safely and albeit for a limited time.

The arrow 1003 identifies the start of charging the second rechargeable battery 4b.

The block 1004 identifies reaching the first charging value R₁ or charging time T₁ for the second rechargeable battery 4b.

The block 200 identifies the switching step which takes place immediately and automatically following having reached said first charging value R₁ or charging time T₁ for the second rechargeable battery 4b. At this point the battery charger 100 again charges the first rechargeable battery 4a.

Where an indicator 400 is present, this will be activated to indicate that it is possible to proceed with the removal of the second rechargeable battery 4b from the first station 101, and that this is available to allow the tool to be used safely and albeit for a limited time.

The block 1005 identifies an electronic verification step of whether the threshold charging value 300 has been reached. If not, the method proceeds with a new partial charging of the first rechargeable battery for a further first charging value R₁ or charging time T₁, after which a new switching step 200 is reached.

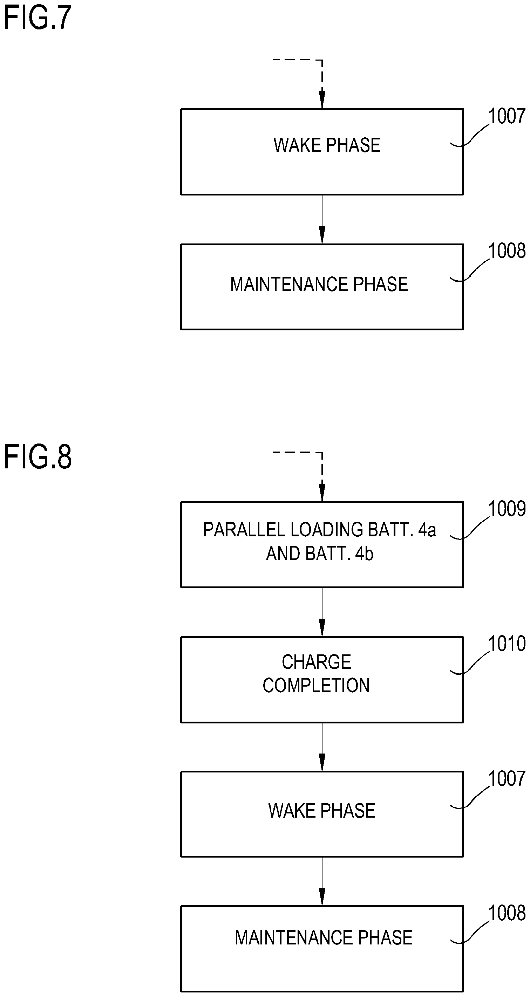

If so, the method proceeds with the steps indicated in the diagram of figure 7 and figure 8, explained below.

The diagram of figure 7 illustrates a particular embodiment of the method in which upon reaching the threshold charging value 300, the wake step is started (block 1007) and, subsequently, the charge maintenance step (block 1008) as described above. The embodiment of the method of figure 7 assumes the absence of the second charging configuration.

The diagram of figure 8 illustrates a particular embodiment of a charging method executed by a battery charger 100 which can enter the second charging configuration. In such a case, upon reaching the threshold charging value 300 (block 1005, figure 6), the battery charger 100 of the present disclosure automatically switches to the second charging configuration. The block 1009 identifies the second charging configuration in which the first rechargeable battery 4a and the second rechargeable battery 4b are charged in parallel (simultaneously) with an electric current which can be constant or decreasing as the charge level increases.

The block 1010 identifies a step of completing the battery charging.

The block 1007, similar to that described in relation to the diagram of figure 7, identifies the wake step.

The block 1008 identifies the charge maintenance step.

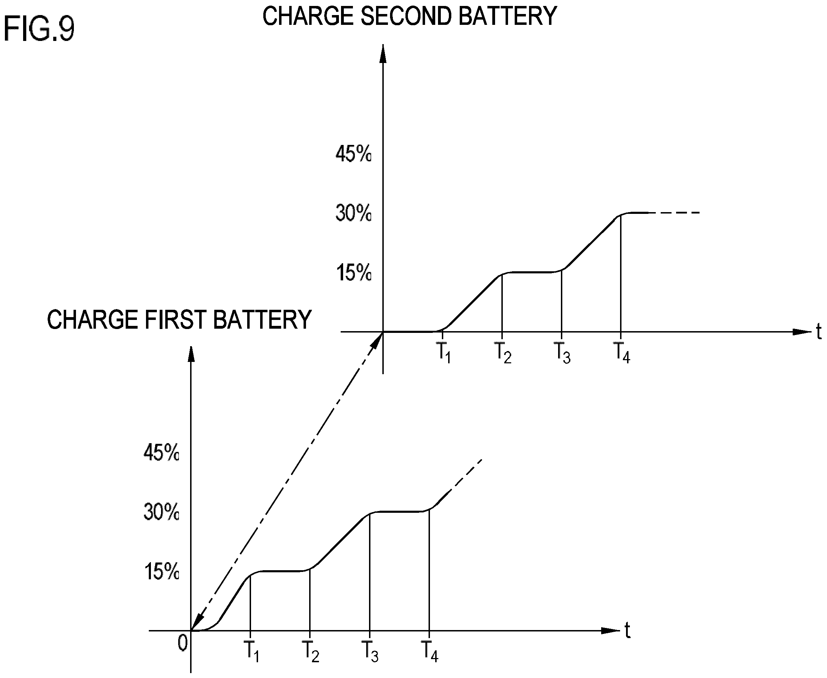

Figure 9 graphically exhaustively illustrates how the charging of a first and a second rechargeable battery, both connected to the battery charger 100 which is the subject matter of the present disclosure, takes place. In particular, between time 0 and time T₁, the first rechargeable battery is charged; the second rechargeable battery, although connected to the battery charger 100, is not charged. The switching occurs when the first rechargeable battery reaches 15% of the total charging value. Unlike time T₁ and time T₂, the second rechargeable battery is subject to an initial charging step, while the first rechargeable battery is not charged. Once the 15% charge level has been reached (time T₂), a new switching takes place which brings the charging back to the first rechargeable battery. This is charged up to time T₃, for a new incremental value equal to 15% additional charge, reaching a charge equal to 30% with respect to the total charging value. At this point (time T₃) a new switching takes place in which the battery charger 100 begins to charge the second rechargeable battery for a further incremental 15%, until it also reaches the charge value equal to 30% of the total charge value. At this point (time T₄) a new switching takes place.

The invention is not limited to the embodiments depicted in the attached figures; for this reason, where reference numbers or symbols appear in the following claims, said reference numbers or symbols will be provided for the sole purpose of increasing the intelligibility of the claims and must not be considered as limiting.

It is finally evident that additions, modifications or variations can be applied to the object of the present disclosure, which are obvious to a person skilled in the art, without departing from the scope of protection provided by the appended claims.

## Claims

1. Battery charger (100) for tools, in particular of the type with power supply by means of rechargeable batteries, comprising:
- at least a first station (101), in particular a first charging port, configured to be operatively connected with at least a first rechargeable battery (4a) and a second station (102), in particular a second charging port, configured to be operatively connected with at least a second rechargeable battery (4b), said first station (101) being configured to provide electrical energy to said first rechargeable battery (4a) and said second station (102) being configured to provide electrical energy to said second rechargeable battery (4b), and
- a data processing unit (103), operatively connected to said first station (101) and to said second station (102), so as to arrange an activation of said first station (101) so as to determine a charging of said first rechargeable battery (4a) by means of said first station (101) and/or an activation of said second station (102) so as to determine a charging of second rechargeable battery (4b) by means of said second station (102),
in which the battery charger (100) is configured to actuate at least one charging configuration, at a use condition in which said first rechargeable battery (4a) and said second rechargeable battery (4b) are connected to the first station (101) and the second station (102), respectively,
**characterized in that**, in said charging configuration, the data processing unit (103) executes or imposes at least a first switching (200) from a state of an activation of said first station (101) to a state of activation of said second station (102) and a second switching (200) from a state of an activation of said second station (102) to a state of activation of said first station (101), so that said first rechargeable battery (4a) and said second rechargeable battery (4b) are, in said use condition, alternately charged with each other.

2. Battery charger (100) according to claim 1, wherein said battery charger (100) is further configured to operate said first switching (200) and said second switching (200) automatically,
particularly wherein said first switching (200) comprises an activation and/or a power supply of said first station (101) alternatively to said second station (102) and wherein said second switching (200) comprises an activation and/or a power supply of said second station (102) alternatively to said first station (101).

3. Battery charger (100) according to claim 1 or claim 2, wherein said data processing unit (103) is configured to charge from a memory (106) and/or to receive from an external data source (105), at least one electronic datum indicating a first predetermined charging value (R₁) or charging time (T₁), in particular wherein in said charging configuration said data processing unit (103) is configured to execute said first switching (200) and/or said second switching (200) upon said first rechargeable battery (4a) and/or said second rechargeable battery (4b) reaching at least said first predetermined charging value (R₁) or charging time (T₁).

4. Battery charger (100) according to claim 3, wherein, in said charging configuration, said data processing unit (103) is configured to keep said first rechargeable battery (4a) or, alternatively, said second rechargeable battery (4b), constantly charging until the charge has reached the first predetermined charging value (R₁) or until the charging time has reached the first predetermined charging time value (T₁).

5. Battery charger (100) according to one or more of the preceding claims, wherein in said charging configuration, said data processing unit (103) is configured to reiterate said first switching (200) and said second switching (200) until reaching a threshold charging value (300) in said first rechargeable battery (4a) and/or in said second rechargeable battery (4b),
optionally wherein said threshold charging value (300) is at least 70% of the total charge of said first rechargeable battery (4a) and/or of said second rechargeable battery (4b), or 80% of the total charge of said first rechargeable battery (4a) and/or of said second rechargeable battery (4b), or 85% of the total charge of said first rechargeable battery (4a) and/or of said second rechargeable battery (4b), or 90% of the total charge of said first rechargeable battery (4a) and/or of said second rechargeable battery (4b) or 100% of the total charge of said first rechargeable battery (4a) and/or of said second rechargeable battery (4b).

6. Battery charger (100) according to claim 5, wherein said battery charger (100) is configured to charge said at least a first rechargeable battery (4a) and/or said at least a second rechargeable battery (4b) with a direct current, or with an alternating current, preferably reducing as the total charge increases, preferably wherein in said charging configuration said battery charger (100) is configured to charge said at least a first rechargeable battery (4a) and/or said at least a second rechargeable battery (4b) with said direct current.

7. Battery charger (100) according to one or more of the preceding claims, wherein said first predetermined charging value (R₁) is defined in accordance with a power or current absorption of said tool and/or in accordance with a capacity of said first rechargeable battery (4a) and/or of said second rechargeable battery (4b) and/or wherein the data processing unit (103) is configured to receive from said first rechargeable battery (4a) and/or from said second rechargeable battery (4b) and/or to electronically derive as a function of at least one among a current, internal resistance and/or charging voltage value of said first rechargeable battery (4a) and/or of said second rechargeable battery (4b), preferably through said first station (101) and said second station (102), at least one overall capacity value (Cₜₒₜ) of said first rechargeable battery (4a) and/or of said second rechargeable battery (4b), in particular wherein said first predetermined charging value (R₁) is determined as a predetermined percentage of said overall capacity value (Ctₒt), said percentage being preferably at least 10% or at least 15% or at least 20% of said overall capacity (Cₜₒₜ).

8. Battery charger (100) according to one or more of the preceding claims, wherein the battery charger (100) is configured to actuate a further charging configuration, at said use condition in which said first rechargeable battery (4a) and said second rechargeable battery (4b) are connected to the first station (101) and to the second station (102), respectively,
wherein in the further charging configuration the data processing unit (103) controls a simultaneous activation and/or power supply of said first station (101) and said second station (102) so that said first rechargeable battery (4a) and said second rechargeable battery (4b) are simultaneously charged.

9. Battery charger (100) according to claim 8, wherein said data processing unit (103) determines, preferably automatically determines, a transition from said first charging configuration to said second charging configuration when the charge level of said first rechargeable battery (4a) and the charge level of said second rechargeable battery (4b) both exceed said threshold charging value (300).

10. Battery charger (100) according to one or more of the preceding claims, wherein the battery charger (100) is configured to actuate a charge maintenance configuration, at said use condition in which said first rechargeable battery (4a) and said second rechargeable battery (4b) are connected to said first station (101) and to said second station (102), respectively,
wherein, in said charge maintenance configuration, said data processing unit (103) electronically measures, at predefined time intervals, at least one among a charge and/or voltage level of said first rechargeable battery (4a) and/or of said second rechargeable battery (4b).

11. Battery charger (100) according to claim 10, wherein, in said charge maintenance configuration, if said charge level and/or said voltage fall below a minimum charge level and/or below a minimum voltage level, respectively, said data processing unit (103) determines, preferably automatically determines, a transition from said charge maintenance configuration to said charging configuration or to said further charging configuration.

12. Battery charger (100) according to one or more of the preceding claims, comprising a power supply stage (104) operatively connected to said first station (101), to said second station (102) and to said data processing unit (103), wherein said power supply stage (104) is configured to provide, electrical power supply to said first station (101), to said second station (102) and to said data processing unit (103),
wherein said battery charger (100) is configured to prevent the electrical supply of at least one of said first station (101), said second station (102) and said data processing unit (103) with electrical energy provided by said first rechargeable battery (4a) and/or by said second rechargeable battery (4b),
wherein said battery charger (100) is configured to actuate a wake configuration at said use condition in which said first rechargeable battery (4a) and said second rechargeable battery (4b) are connected to the first station (101) and the second station (102), respectively.

13. Battery charger (100) according to claim 12, wherein, in said wake configuration, said first station (101) and said second station (102) do not deliver electrical energy to said first rechargeable battery (4a) and to said second rechargeable battery (4b) do not receive electrical energy from said first station (101) and/or from said second station (102), said data processing unit (103) controlling said first station (101) and said second station (102) so as to inhibit a flow of electrical energy from said first rechargeable battery (4a) and from said second rechargeable battery (4b), towards said first station (101) and towards said second station (102) and preferably further towards said data processing unit (103).

14. Battery charger (100) according to any one of the preceding claims, wherein said charging configuration and/or said further charging configuration and/or said charge maintenance configuration and/or said wake configuration are mutually exclusive with each other.

15. Method of charging tool batteries by means of a battery charger (100), said method being executable at a use condition in which a first rechargeable battery (4a) and a second rechargeable battery (4b) are connected to a first station (101), respectively, in particular a first charging port, of said battery charger (100) and to a second station (102), in particular a second charging port, of said battery charger (100), said method comprising:
- a supply of electrical energy to said first rechargeable battery (4a) connected to said first station (101) of said battery charger (100),
- a supply of electrical energy to said second rechargeable battery (4b) connected to said second station (102) of said battery charger (100),
- a control of a data processing unit (103) of said battery charger (100), said data processing unit (103) being operatively connected to said first station (101) and to said second station (102),
in which said control comprises and determines, in a charging configuration, occurring at said use condition, at least a first switching (200) from a state of an activation of said first station (101) to a state of activation of said second station (102), and a second switching (200) from a state of an activation of said second station (102) to a state of activation of said first station (101), so that said first rechargeable battery (4a) and said second rechargeable battery (4b) are alternately charged with each other.
